# EUROPÄISCHE PATENTANMELDUNG

(11) **EP 2 476 722 A1**
(43) Veröffentlichungstag der Anmeldung: **18.07.2012**
(21) Anmeldenummer: 10001832.4
(22) Anmeldetag: 02.05.2000
(51) Int. Cl.: C08J 5/22, B01D 69/12, B01D 69/14, H01M 2/16, H01M 8/10, H01M 8/04, B01J 31/06, B01J 31/08, B01J 35/06, C08K 9/02, B82Y 30/00

(54) **Protonenleitende Keramik-Polymer-Kompositmembran für den Temperaturbereich bis 300°C**

(30) Priorität: 30.04.1999 DE 19919988
(62) Teilanmeldung aus: 00925253.7
(71) Anmelder: Häring, Thomas, 70619 Stuttgart (DE); Häring, Rima, 70619 Stuttgart (DE)
(72) Erfinder: Kerres, Jochen, 73760 Ostfildern (DE); Nicoloso, Norbert, 35037 Marburg (DE); Schäfer, Günther, 65593 Westhofen (DE)

(57) **Zusammenfassung**

Die Erfindung betrifft eine Kompositmembran aus organischen Funktionspolymeren und keramischen Nanoteilchen (1-100 nm), ausgenommen Schicht- und Gerüstsilicate, mit intercaliertem Wasser und/oder hoher Oberflächenkonzentration an aciden/basischen Gruppen (z.B. Hydroxyl) und Wasser. Die Verwendung derartiger Partikel ermöglicht neben einer ausreichend hohen mechanischen Stabilität des Kompositwerkstoffs eine Stabilisierung der für die Leitfähigkeit notwendigen Protonenkonzentration in der Membran bis zu Einsatztemperaturen von 300 °C. Wesentlich sind die sich in der mikroheterogenen Mischung ausbildenden Grenzflächen zwischen Polymer und Keramikpulver, die bei ausreichend hoher Anzahl (hoher Phasenanteil nanoskaliger Teilchen) Protonentransport bei geringen Druck und Temperaturen oberhalb 100 °C erlauben. Modifikation der Polymer/Keramikpartikel-Randschicht anhand unterschiedlich polarer Randgruppen, bevorzugt am Polymergerüst, beeinflusst die lokale Gleichgewichtseinstellung und damit Bindungsstärke der protonischen Ladungsträger. Damit ergibt sich z.B. bei Methanol-Wassermischungen als Brennstoff die Möglichkeit, den MeOH-Durchtritt durch die Membran zu verringern, was für die Entwicklung effizienterer Direktmethanol-Brennstoffzellen von besonderer Bedeutung ist. Als Einsatzgebiete eröffnen sich außer Brennstoffzellen auch die Bereiche in der Energie- und Prozeßtechnik, bei denen neben elektrischem Strom Wasserdampf erzeugt oder benötigt wird oder (elektro-)chemisch katalysierte Reaktionen bei erhöhten Temperaturen von atmosphärischem Normaldruck bis erhöhten Arbeitsdrücken und oder unter Wasserdampf-Atmosphäre duchgeführt werden.

Die Erfindung betrifft weiterhin Verfahren zur Herstellung und Verarbeitung einer solchen Kompositmembran.

## Beschreibung

### Stand der Technik

Bei bekannten protonenleitenden Membranen (z.B. Nafion), die gezielt für Brennstoffzellenanwendungen entwickelt wurd en, handelt es sich i.d.R. um fluorkohlenwasserstoff -basierende Membranen, die einen sehr hohen Gehalt bis zu 20% an Wasser in ihrem Membrangerüst besitzen. Die Leitung der Protonen basiert auf dem Grotthus-Mechanismus, nach dem in sauren Medien Protonen, in alkalischen Lösungen Hydroxylionen, als Ladungsträger auftreten. Es besteht eine über Wasserstoffbrückenbindungen vernetzte langreichweite Struktur, die den eigentlichen Ladungstransport ermöglicht. Das bedeutet, daß das in der Membran vorhandene Wasser eine tragende Rolle beim Ladungstransport spielt: Ohne dieses zusätzliche Wasser findet in diesen kommerziell erhältlichen Membranen kein nennenswerter Ladungstransport durch die Membran mehr statt, sie verliert ihre Funktion. Andere, neuere Entwicklungen, die anstelle des Fluorkohlen - wasserstoffgerüsts mit Phosphatgerüsten arbeiten, benötigen ebenfalls Wasser als zusätzlichen Netzwerkbildner (Alberti et. al., SSPC9, Bled, Slowenien, 17.-21.8.1998, Extended Abstracts, S. 235) . Die Zugabe kleinster SiO₂-Partikel zu o.g. Membranen (Antonucci et. al., SSPC9, Bled, Slowenien, 17.-21.8.1998, Extended Abstracts, S. 187) führt zwar zu einer Stabilisierung der Protonenleitung bis 140 °C, allerdings nur unter 4,5 bar Druck Betriebsbedingungen. Ohne erhöhten Arbeitsdruck verlieren auch diese (und ähnliche) Kompositmembranen oberhalb 100 °C ihr Wassemetzwerk und trocknen aus.

Ein wesentlicher Nachteil aller o. g. Membrantypen ist daher, daß sie selbst unter optimalen Betriebsbedingungen nur für Anwendungs temperaturen bis max. 100 °C geeignet sind.

### Erfindungsbeschreibung

Durch die Erfindung werden Komposit-Materialien bereitgestellt, die für Anwendungen in der Technik, speziell der Energietechnik und hier insbesondere für Brennstoffzellen im Mittel- und Hoch temperaturbetrieb (Temperatur oberhalb 100 °C), geeignet sind und bis zu Temperaturen von 300°C eine ausreichende Protonenleitfähigkeit besitzen.

Diese Aufgabe wird erfindungsgemäß durch ein Material gelöst, das aus einer Polymerkomponente und einer temperatur- und korrosionsstabilen, wasserhaltigen und nanoskaligen anorganischen (oxidischen) Komponente besteht, ausgeschlossen Gerüst- und Schichtsilicate. Im Vergleich zu konventionellen polymerelektrolytbasierten Materialien ist die Funktionsfähigkeit des Materials (Protonentransport) eng mit der keramischen Komponente verknüpft, was im Sinne eines einfachen Perkolationsansatzes einen Volumenanteil > Perkolationsgrenze (ca. 30 %) des Systems bzw. der Keramikkomponente erfordert (bei nichtidealen Teilchen, z.B. Nichtkugelförmigen, elongierten Teilchen wird diese Grenze i.a. zu weit niedrigeren Werten verschoben).

Als Polymerkomponente können alle Polymere eingesetzt werden, die eine gute Temperaturbeständigkeit aufweisen. Temperaturbeständige schwach ionen- oder protonenleitende Polymere wie z.B. Polybenzimidazol (PBI) sind vorteilhaft, jedoch nicht zwingend erforderlich. Gleiches gilt für schwach elektronisch leitende Poly - mere (Randbedingung:elektronische Leitfähigkeit mindestens 1-2 Größenordnungen geringer als Protonenleitfähigkeit). Alle letztgenannten Materialien sind Materialien mit einer weiten Bandlücke, typischerweise in der Größenordnung E_{g} > 2 eV.

Im folgenden sind die einsetzbaren Komponenten und damit auch deren möglichen Kombinationen näher beschrieben.

### Einsetzbare Polymere:

1 Alle temperaturbeständigen unfunktionalisierten Polymere, insbesondere:
   - Arylhauptkettenpolymere (z. B. Polyethersulfone, Polyetherketone, Polyphenylenoxide, Polyphenylensulfide)
   - Hetarylhauptkettenpolymere (z. B. Polybenzimidazole, Polyimidazole, Polypyrazole, Polyoxazole, ...)
2 lonomere mit SO3H-, COOH,- PO3H2-Kationenaustauschergruppen und vorzugsweise einem Aryl- oder Hetaryl-Backbone
3 lonomere mit Anionenaustauschergruppierungen NR3+X - (R=H, Aryl, Alkyl, X= F, Cl, Br, I)
4 Vorstufe der lonomeren mit beispielsweise SO2Cl-, S02NR2, -CONR2-, etc. Gruppierungen oder NR2-Gruppierungen ((R=H, Aryl, Alkyl)
5 lonomerblends
6 Polymere mit sauren und anderen funktionellen Gruppen auf derselben Polymerhauptkette

Die Polymere und Polymerblends können dabei noch zusätzlich kovalent vernetztsein.

### Verwendungsfähige keramische Materialien

Die (anorganisch)-keramische Komponente des Komposites besteht zum wesentlichen Teil aus einem wasserhaltigen stoichiometrischen oder nichtstöchiometrischen Oxid MₓO_{y} * n H₂O (oder einer Mischung von Oxiden), wobei M die Elemente Al, Ce, Co, Cr, Mn, Nb, Ni Ta, La, V und W darstellt. Nicht Inhalt des Patents sind keramische Komponenten, die SiO₂ als überwiegenden Bestandteil enthalten. Alle keramischen Stoffe liegen in Form von nanokristallinen Pulvern (1 - 100 nm) vor, die Oberfläche von > 100 m ²/g aufweisen. Die bevorzugte Teilchengröße liegt bei 10 - 50 nm. Wesentlich für die hohe Protonenbeweglichkeit sind ihr hoher Wassergehalt (größer 10 bis 50 wt%) und die hinreichende Acidität oder Basizität der Oberflächen -Gruppen ( -OH). Vorteilhaft ist die Ausbildung von wasserhaltigen Schichtstrukturen im Volumen einiger der o.a. Oxide, da dann auch im Volumen eine hohe Protonenbeweglichkeit und Protonenpufferkapazität vorliegt. Als prototypisches Material sei protonenausgetauschtes beta -Aluminiumoxid genannt (und Mischungen mit diesem Material). Neben den o. a. Materialien sind auch Carbonate und Hydroxycarbonate bzw. deren Mischung mit den Oxiden verwendungsfähig.Weiterhin einsetzbar sind die bei höheren Temperaturen (300 < T < 700 °C) protonenleitenden perowskitischen Oxide als Komponente für ein ternäres Komposit Oxid 1/Polymer/Oxid2, was eine Erhöhung der Einsatztemperatur ermöglicht. Letztere wird allein durch Zersetzungstemperatur der eingesetzten Polymerkomponente begrenzt , i.e im Falle von optimierten Thermoplasten T < 700 C. Für das Element Al als Hauptbestandteil der keramischen Komponente ergeben sich Aluminiumoxidverbindungen, die bis zu 35 wt% Wasser enthalten können (die Tabelle im Anhang listet typische Zusammensetzungen für die Aluminate, sowie ihre thermophysikalischen Eigenschaften auf). Für V und W ergeben sich analoge Oxidkomponenten bzw. Vorstufen aus Heteropolysäuren oder gelartigen Verbindungen und die die o.a. notwendigen strukturellen Eigenschaften besitzen. Besonders vorteilhafte Kompositeigenschaften ergeben sich, wenn vorzugsweise Keramikpulver aus Bayerit, Pseudoböhmit oder protonenausgetauschtem β-Aluminat sowie Mischoxide mit WOₓ (2<x<3,01), V₂O₅ oder MnO₂ mit bis zu 40 wt% Wasser als weiterer Komponente verwendet werden.

Bei Einsatz dieser letzgenannten Materialien steigt die Temperaturstabilität des Kompositwerkstoffs bis auf mindestens 300 °C bei einer relativen Feuchte von 60 - 70 % an. Erhöhung der Luftfeuchtigkeit und / oder Erhöhung des Arbeitsdrucks steigert die Anwendungstemperatur bis auf etwa 500 °C.

### Verfahrenstechnische- und Eigenschaftsvorteile gegenüber herkömmlichen Materialien

Vorteile der erfindungsgemäßen Komposite:
- H₂O-Speicherfähigkeit bis 250 -300°C bei Atmosphärendruck (unter erhöhtem Druck bis 500 °C)
- Protonen- bzw. OH-Ioneneitung über wasser - und hydroxylhaltige Grenzflächenstruktur bis mindestens 250°C
- Gezielte Variation der lokalen Ladungsträger -Bindungsstärke durch unterschiedlich polare Gruppen am Polymergerüst bzw. an der Keramikpartikel-Oberfläche möglich (Verringerung des Methanoldurchtritts)
- Verbesserte mechanische Stabilität gegenüber keramischen und z .T. auch polymeren protonenleitenden Materialien
- Leichte Verformbarkeit, insbesondere zur Herstellung von Formkörpern, z. B. Rohre, Tiegel, Halbzeuge, wie sie in der SOFC, Batterien und/oder elektrokatalytischen (Membran-)reaktoren Verwendung finden
- verringertes wartungs- und regelintensives Wassermanagement im Anlagenbetrieb bei T > 100 °C.
   Aufgrund der hohen H ₂O-Pufferfähigkeit des Kompositwerkstoffs (thermodynamische Eigenschaft des Keramikpulvers) stellen sich die für den Einsatz notwendigen hohen Protonenkonzentration völlig selbstständig ein und kön - nen unter reduzierten Drücken einen stabilen Betrieb gewährleisten. Dies er - öffnet neuartige Anwendungsfelder für den Einsatz einer solchen Kom - positmembran, etwa in wartungsarmen Gassensoren oder wartungsfrei arbeitenden Wasserstoffpumpen in der Anlagentechnik, speziell der Kerntechnik.
- Verwendung von nichtprotonenleitfähigen Polymeren möglich (Grenzfall ausschließlichen Protonentransports über Volumen/Grenzfläche der perkolierenden Oxidpartikel)
- mechanisches Eigenschaftsprofil einer Keramik wie thermomechanische Festigkeit, erhöhte Schlagzähigkeit und Härte, aber Fertigungsmethoden von Polymerwerkstoffen, extrudieren, foliengießen, tiefziehen, etc...
- niedriger Wasserpartialdruck bei Be triebstemperaturen über 120 °C, damit geringe Degradationstendenz
- Alle Komponenten der Komposite sind kommerziell verfügbar und preiswert.
- Die u.a. einfachen Herstellungsverfahren ermöglichen leichtes Up -Scaling für die Massenproduktion.

Zur Herstellung und zur Verarbeitung eines derartigen Kompositmaterials geeignete Verfahren sind:
- Foliengießen (Einmischen des Keramikpulvers in eine Polymerlösung, Homogenisieren, Foliengießen, Abdampfen des Lösungsmittels.
- Extrudieren der Polymer/Lösungsmittel/Keramik-Suspension
- Aufsprühen/Auftragen der Polymer/Lösungsmittel/Keramik-Suspension auf einen Support
- Spin-Coating

Die erfindungsgemäßen Polymer/Keramikpartikel-Komposite sind keine Polymerkeramiken im Sinne der Precursor-basierenden Pyrolysekeramiken, die zu SiC, SiCN, SiBCN, Si₃N₄ Misch-Keramiken für Hochtemperaturanwenungen oberhalb 1300 °C führen. Der Begriff "Polymerkeramik" wird für Strukturkeramiken (s. o.) verwendet, die durch Pyrolyse aus metallorganischen Verbindungen hergestellt werden. Stichwort: Polysilazane, Polysilane, Polycarbosilane, SiBCN - Keramik, etc.

## Patentansprüche

1. Protonen- oder Hydroxylionenleitfähiger Polymer-Keramikpartikel-Komposit oder Polymer-Keramikpartikel-Kompositmembrane enthaltend eine polymere Komponente (A) und eine keramische Komponente (B), wobei (B) sein kann
- ein nanoskaliges Oxid mit intercaliertem Wasser und gleichzeitig acidischen/basischen Oberflächen-OH mit einer Oberfläche >20 m²/g, entsprechend einem mittleren Durchmesser < 100 nm,
- ein protonenleitendes perowskitisches Oxid wie z. B. Strontium-Barium-Ceroxid, Barium-Calcium-Niobat
oder im Falle der Verwendung als Hydroxylionenleiter kann (B) ein Carbonat sein, insbesondere MgCO₃xH₂O und La(CO₃)₂ x H₂O,
wobei das bevorzugte Mischungsverhältniss von Polymer und (B) von 99 zu 1 bis 70 zu 30 (in vol%) beträgt,
wobei die polymere Komponente eine oder mehrere temperaturstabile, nichtprotonenleitfähige Polymerkomponenten zusätzlich oder ausschließlich enthalten kann.

2. Komposit nach Anspruch 1, **dadurch gekennzeichnet, daß** er ein percolierendes Keramikpartikelnetzwerk aufweist, **dadurch gekennzeichnet, dass** der Protonenleiter das Mischungsverhältniss von Polymer und Oxid von > 30 vol%. besitzt.

3. Komposit nach Ansprüchen 1 und 2, **dadurch gekennzeichnet, daß** er eine Protonenleitfähigkeit > 10⁻⁵ S/cm bei T > 100 °C besitzen, wobei die elektronische Teilleitfahigkeit in der gleichen Größenordnung oder geringer ist.

4. Komposit nach Anspruch 1, **dadurch gekennzeichnet, daß** die polymere Komponente A
- ein Arylhauptkettenpolymer ist und aus folgenden Bausteinen zusammengesetzt sein kann: 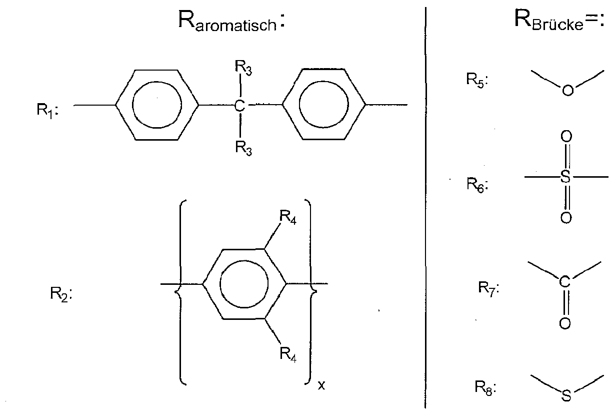 wobei erfindungsgemäße Aryl-Hauptkettenpolymere sind:
- Poly(etheretherketon) PEEK Victrex^{®} ([R₅-R₂-R₅-R₂-R₇]ₙ; x=1, R₄=H),
- Poly(ethersulfon) PSU Udel^{®} ([R₁-R₅-R₂-K₆-K₂-R₅]ₙ; R₂: x=1, R₄=H),
- Poly(ethersulfon) PES VICTREX^{®} ([R₂-R₆-R₂-R₅]ₙ; R₂: x=1, R₄=H),
- Poly(phenylsulfon) RADEL R^{®} ([(R₂)₂-R₅-R₂-R₆-R₂]ₙ; R₂: x=2, R₄=H),
- Polyetherethersulfon RADEL A^{®} ([R₅-R₂-R₅-R₂-R₆]ₙ-[R₅-R₂-R₆-R₂]ₘ; R₂: x=1, R₄=H, n/m =0,18),
- Poly(phenylensulfid) PPS ([R₂-R₈]ₙ; R₂: x=1, R₄=H)
- Poly(phenylenoxid) PPO ([R₂-R₅]ₙ; R₄=CH₃)
und/oder
Heteroarylhauptkettenpolymer ist und folgende Bausteine enthalten kann: 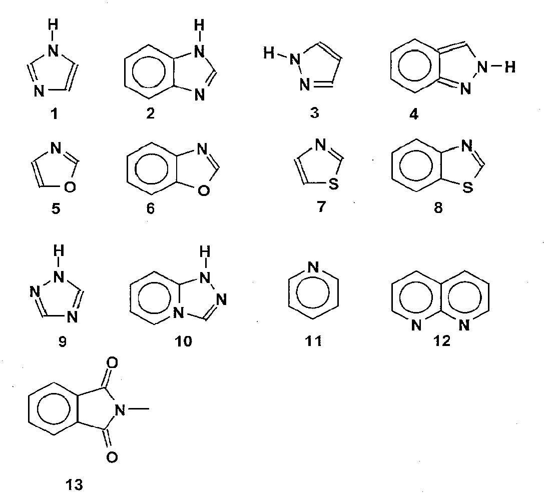 wobei 1 Imidazol, 2 Benzimidazol, 3 Pyrazol, 4 Benzpyrazol, 5 Oxazol, 6 Benzoxazol, 7 Thiazol, 8 Benzthiazol, 9 Triazol, 10 Benzotriazol, 11 Pyridin, 12 Dipyridin und 13 Phtalsäureimid ist,
und wobei die polymere Komponente (A) optional die folgenden Kationenaustauschergruppen aufweisen kann: -SO₃M, -PO₃M₂, -COOM, -B(OM)₂ , worin M bedeutet H, ein einwertiges Metallkation, Ammonium NR₄ mit R=H, Alkyl, Aryl
und/oder
die polymere Komponente (A) optional die folgenden Anionenaustauschergruppen aufweisen kann: NR₄ mit R=H, Alkyl, Aryl, Pyridinium, Imidazolium, Pyrazolium, Sulfonium.

5. Hydroxylionenleitfähiger oder protonenleitfähiger Polymer/Keramikpartikel-Komposit nach den Ansprüchen 1 bis 4, **dadurch gekennzeichnet, daß** die keramische Komponente (B) ausgewählt ist aus
- wassserhaltigen und nanogroßen Partikeln, die OH-Gruppen an ihrer Oberfläche ausbilden, und basierend sind auf
Al₂O₃ (Bayerit, Pseudoböhmit, Gibbsit = Hydrargillit, Diaspor, Böhmit), Vanadium- oder Wolfram-basierende Oxide (V₂O₅, VOₓ, WOₓ) oder Legierungen aus diesen Oxiden:
| | | |
|---|---|---|
| Al₂O_{3*}xH₂O | wobei x = 1-10 | |
| V₂O_{5 *}xH₂O | wobei x = 1-10 | |
| VO_{x*}yH₂O | wobei y = 1-10 | x = 1,5 - 3 |
| WO_{x*}yH₂O | wobei y = 1-10 | x = 2 -3 |
- protonierten, ionenausgetauschten Legierungen von Oxiden, die in ihrer ursprünglichen Ausgangszusammensetzung die β-Aluminat-Struktur formen, ausgewählt aus
| | | |
|---|---|---|
| zMe₂O-xMgO-yAl₂O₃, | _{z}Me₂O-xZnO-yAl₂O₃, | zMe₂O-xCoO-yAl₂O₃, |
| zMe₂O-xMnO-yAl₂O₃, | zMe₂O-xNiO-yAl₂O₃, | zMe₂O-xCrO-yAl₂O₃, |
| ZMe₂O-xEuO-yAl₂O₃, | zMe₂O-xFeO-yAl₂O₃, | |
| zMe₂O-xSmO-yAl₂O₃ | | |
| mit Me= Na, K, wobei z = 0,7 - 1,2 | | |
| (mit x = 0,1-10, y = 0,1 - 10). | | |

6. Hydroxylionenleitfähiges oder protonenleitfähiges Polymer/Keramikpartikel-Komposit nach den Ansprüchen 1 bis 5, **dadurch gekennzeichnet, daß** die Oberflächen-OH-Gruppen durch Wechselwirkung mit weiteren organischen Verbindungen modifiziert sind.

7. Verfahren zur Herstellung der Komposite nach den Ansprüchen 1-6, **dadurch gekennzeichnet, daß** die Nanopartikel in die Lösung des Polymers eingemischt werden, danach homogenisiert werden, gefolgt von einem Foliengießen und dem Abdampfen des Lösungsmittels.

8. Verfahren zur Herstellung der Komposite nach den Ansprüchen 1-7, **dadurch gekennzeichnet, daß** das Polymer und die Nanopartikel in einem Lösungsmittel dispergiert werden und die Suspension extrudiert wird.

9. Verfahren zur Herstellung der Komposite nach den Ansprüchen 1-8, **dadurch gekennzeichnet, daß** das Polymer und die Nanopartikel in einem Lösungsmittel dispergiert werden und die Suspension auf einen Support aufgesprüht oder aufgetragen werden.

10. Verfahren nach den Ansprüchen 7 bis 9, **dadurch gekennzeichnet, daß** das verwendete Lösungsmittel ausgewählt ist aus N-Methylpyrrolidinon (NMP), N,N-Dimethylacetamid (DMAc), N,N-Dimethylformamid (DMF), Dimethylsulfoxid (DMSO), Sulfolan, Tetrahydrofuran (THF), Glyme, Diglyme, Triglyme, Tetraglyme, Dioxan, Toluol, Xylol, Petrolether oder aus beliebigen Mischungen dieser Lösungsmittel untereinander.

11. Verwendung der Komposite nach den Ansprüchen 1-10 in
- Brennstoffzellen (Direktmethanol- bzw Direktäthanol-, H2-, Kohlenwasserstoff-Brennstoffzellen)
- Batterien, insbesondere Sekundärbatterien
- Heißgas-Methanreforming zur Methanol- oder Ethanolsynthese,
- Wasserstoffherstellung aus Heißdampf
- elektrochemische Sensoren für H2, CHx, NOx, etc.
- in der Medizintechnik und
- der Elektrokatalyse

12. Verwendung der Protonenleiter nach den Ansprüchen 1 bis 11 zur Herstellung flächiger Gebilde, insbesondere Folien, Membranen, katalytischen oder elektrokatalytischen Elektroden.

13. Verwendung der Protonenleiter nach den Ansprüchen 1 bis 11 zur Herstellung von Rohren und Tiegeln über Extrusion und Preßverfahren.
